# EUROPEAN PATENT SPECIFICATION

(11) **EP 2 884 761 B1**
(45) Date of publication and mention of the grant of the patent: **22.05.2019**
(21) Application number: 13306699.3
(22) Date of filing: 11.12.2013
(51) Int. Cl.: H04Q 11/00, H04L 12/26

(54) **Method of monitoring a connectivity of an optical access terminal in an optical access network**
Verfahren zur Überwachung der Konnektivität eines optischen Zugangsendgerätes in einem optischen Zugangsnetzwerk
Procédé de surveillance de la connectivité d'un terminal d'accès optique dans un réseau d'accès optique

(43) Date of publication of application: 17.06.2015
(73) Proprietor: Alcatel Lucent, 91620 Nozay (FR)
(72) Inventor: Hehmann, Jörg, 70435 Stuttgart (DE); Straub, Michael, 70435 Stuttgart (DE)
(74) Representative: Nokia EPO representatives

(56) References cited:
- EP-A1- 2 364 008
- WO-A1-2012/154388
- THOMAS PFEIFFER ET AL: "Cost efficient non-service interrupting monitoring of optical fiber links in FTTH / FTTB networks", OPTICAL COMMUNICATION, 2008. ECOC 2008. 34TH EUROPEAN CONFERENCE ON, IEEE, PISCATAWAY, NJ, USA, 21 September 2008 (2008-09-21), pages 1-2, XP031380973, ISBN: 978-1-4244-2227-2

## Description

### Field of the invention

The invention relates to a method of monitoring a connectivity of an optical network terminal to an optical output port of a remote node in an optical access network. More specifically, but not exclusively, the invention furthermore relates to a network analyser for an optical access network, a controller for controlling a remote node of an optical access network and a remote node for an optical access network.

### Background

A Passive Optical Network (PON) is a type of an optical access network, which allows a plurality of users to be connected to a node of a core network that is for instance a metropolitan area network.

A PON typically comprises at the interconnection of the passive optical network and the core network an Optical Line Termination (OLT). The OLT is considered as a part of the PON. The OLT is connected to an Optical Distribution Network (ODN), which is also a part of the PON. The ODN comprises a plurality of optical links and passive optical components arranged so as to form a point to multipoint structure whose root is connected to the OLT.

The OLT is typically located at the so called Central Office (CO) of the service provider. Each optical link of the OLT may be terminated at its far end by a respective Optical Network Terminal (ONT), which may also be called an Optical Network Unit (ONU).

In a time division multiplex (TDM) PON, the different ONTs communicate with the OLT in a time multiplexing manner, wherein the OLT transmits in the downstream direction on or more data packets within frames of preferably 125 ms time length. Each data packet contains an identification data element that identifies the ONT that should receive the respective data packet. In the upstream direction, the different ONTs transmit data within timeslots assigned by the OLT to these ONTs.

In a TDM network, a remote node as part of the ODN splits the downstream signal towards the ONTs by performing power-splitting of the downstream signal.

In the upstream direction of a TDM PON, each ONT generates a respective upstream signal within time slots associated thereto and transmits this signal along the respective distribution fiber to the remote node. The remote node combines or multiplexes the upstream signals that arrive from the various ONTs via the different distribution fibers according to the known TDM technique and forwards them to the OLT through the feeder fiber.

In a wavelength division multiplex (WDM) PON, each ONT may communicate with the OLT, by using a respective set of wavelengths comprising an upstream wavelength, which the ONT uses for data transmission from the ONT to the OLT, and a downstream wavelength, which the OLT uses for transmission from the OLT to the ONT.

In a WDM PON, the ODN typically comprises a so called remote node, a feeder optical fiber connecting the remote node to the OLT and a number of distribution optical fibers radiating from the remote node. Each distribution fiber may be terminated at its far end by an ONT or by a power splitter connecting the distribution fiber to the multiple ONTs via respective optical drop fibers.

In the downstream direction, the OLT generates one or more downstream optical signals at the downstream wavelengths associated to the ONTs using respective transmitters. The OLT multiplexes the different downstream signals according to the known WDM technique and transmits them to the remote node along the feeder fiber. At the remote node, the downstream signals may be demultiplexed by an optical de-multiplexing device onto the distribution fibers and thus transmitted to the respective ONTs along the respective distribution fibers. In other words, in a WDM access network, the remote node splits the downstream signal coming from the OLT via WDM splitting.

In the upstream direction of a WDM PON, each ONT generates a respective upstream signal at the respective upstream wavelength associated thereto and transmits this signal along the respective distribution fiber to the remote node. The remote node multiplexes the upstream signals received from the various ONTs via the different distribution fibers according to the known WDM technique and forwards them to the OLT through the feeder fiber. At the OLT, the upstream signals may be demultiplexed and provided to respective receivers.

For TDM PON as well as a WDM PON, the remote node may be a passive node, which means, that the remote comprises only passive optical components for de-multiplexing or splitting the downstream signals and multiplexing the upstream signals.

The document EP 2364008 A1 discloses a method of assigning customer premises equipment to a subscriber's data record. According to this method a customer premises equipment such as an optical network terminal is connected to a respective demarcation point unit, which adds additional signal elements to a downstream signal, wherein the optical network terminal reports reception levels to an optical line terminal. The optical line terminal finally assigns the optical network terminal to a subscriber's data record.

### Summary

Proposed is a method of monitoring a connectivity of an optical network terminal to an optical output port of a remote node in an optical access network. The method contains the steps of
- at a network analyzer, transmitting a control signal indicating a request for modulating the power level of an optical downstream signal at a dedicated optical output port of a remote node,
- at a controller, receiving the control signal from the network analyzer or retrieving the control signal from a data base and furthermore transmitting an output control signal indicating the dedicated output port of the remote node via a control channel to the remote node in dependence on one the received control signal or the retrieved control signal,
- at the remote node, receiving via the control channel the output control signal indicating the dedicated output port and furthermore activating an optical modulation device present at the dedicated output port,
- at said optical network terminal, indicating reception levels of a received downstream signal for successive time instances,
- at the network analyzer, retrieving reception level data, wherein the reception level data indicates the reception levels of the downstream signal for the successive time instances, and furthermore deriving a potential connection of the optical network terminal to the dedicated output port.

Furthermore proposed is a network analyzer that contains
- a control unit,
- a signaling interface
wherein the control unit is operable to generate a control signal indicating a request for modulating a power level of an optical downstream signal at a dedicated output port of a remote node,
and wherein the signaling interface is operable to transmit the control signal.

The analyzer contains furthermore,
- a data interface, operable to retrieve reception level data from a management information base, wherein the reception level data indicates reception levels of a downstream signal received at an optical network terminal at successive time instances,
wherein the control unit is furthermore operable to derive a potential connection of the optical network terminal to the dedicated output port.

Furthermore proposed is a controller for controlling a remote node of an optical access network that contains
- a first signaling interface, operable to
   ∘ receive from a network analyzer an input control signal indicating a request for modulating a power level of an optical downstream signal at a dedicated output port of a remote node, or
   ∘ to retrieve said input control signal from a data base,
- a control unit, operable to generate an output control signal indicating the dedicated output port of the remote node in dependence on the input control signal,
- a second signaling interface, operable to transmit the output control signal via a control channel to the remote node.

Furthermore proposed is a remote node for an optical access network that contains
- an optical input port,
- a number of optical output ports,
- an optical splitting device, operable to split an optical downstream signal from the input port onto the output ports,
wherein at each output port a respective optical modulation device is present, wherein each modulation device is operable to modulate a power level of the optical downstream signal fraction split onto the respective output port.

The remote node contains furthermore
- a receiver, operable to receive a control signal indicating one of the output ports via a control channel, and
- a control unit, operable to activate that one of the optical modulation devices present at the indicated output port.

To grasp the different advantages of the proposed method as well as the different proposed devices interacting as claimed, the following aspects have to be taken into consideration.

Due to the fact, that the controller controls an optical modulation of the downstream signal at a dedicated port of the remote node, and furthermore due to the fact that the optical network terminal indicates reception levels for the received downstream signal for successive time instances, there is no need for a step of performing any measurement at the remote node itself and also no need for a step of the remote node transmitting data indicating a possible connection of the ONT to the dedicated port towards the controller. This is taken care of by the fact, that indicated reception levels reported by the optical network terminal are usually received by the OLT of the network and then written into a management information base, in which data is stored, that is reception level data indicating the reception levels of the downstream signal for successive time instances at the optical network terminal. The network analyser may then easily retrieve this reception level data from the management information base. Thus, the remote node does not have to report any data from the remote node back to the controller, which may be a so-called optical monitoring unit or optical monitoring device.

### Brief description of the Figures

Figure 1 shows a general structure of a passive optical network.
Figure 2 shows an optical access network according to a first embodiment.
Figure 3 shows an optical access network according to a second embodiment.
Figure 4 shows a proposed controller for controlling a remote node of an optical access network according to a preferred embodiment.
Figure 5 shows a proposed remote node for an optical access network according to proffered embodiment.
Figures 6a, b, c, d show different embodiments of an optical modulation device present at an output port of remote node.

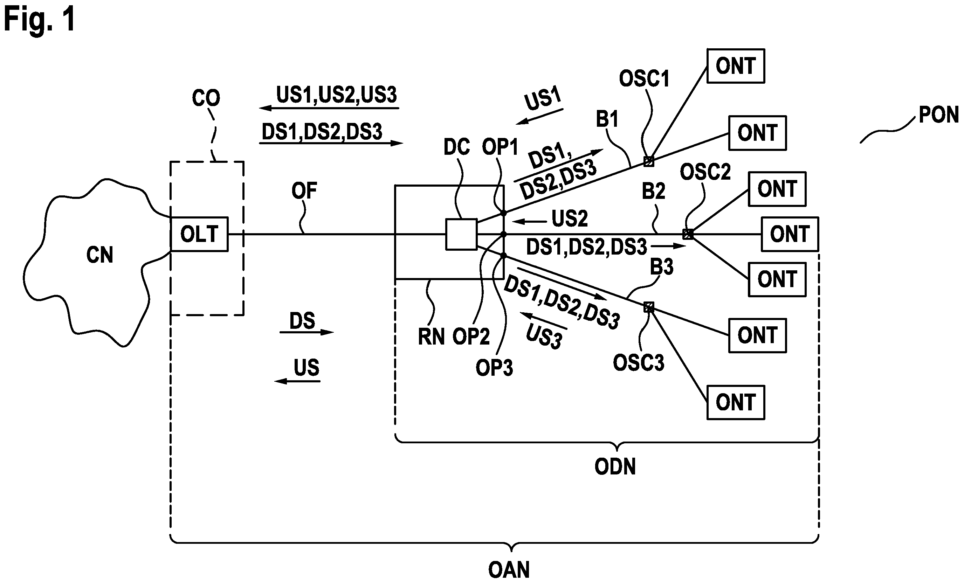

Figure 1 shows a passive optical network PON, which is connected at the central office CO via an optical line terminal (OLT) to a core network CN.

The OLT is connected via an optical feeder fiber OF to a remote node RN. One or more downstream signals DS1, DS2, DS3 are transmitted at respective downstream wavelengths to the remote node RN in a downstream direction DS.

The branches B1, B2, B3 of the distribution network may themselves contain further splitting units OSC1, OSC2, OSC3 for furthermore splitting the downstream signals. At the end of the optical branches B1, B2, B3, customer sided access network termination units in the form of ONTs are connected, which are alternatively ONUs.

In other words, the different ONTs are connected to the remote node RN via different optical output ports OP1, OP2, OP3 of the remote node RN.

The distribution of the downstream signals DS1, DS2, DS3 is performed by the optical splitting unit OSC, which splits the downstream signals DS1, DS2, DS3 onto the branches B1, B2, B3. In a TDM PON, the optical splitting units OSC1, ..., OSC3 may split a downstream signal DS1, DS2, DS3 by means of power splitting, onto each of the branches B1, B2, B3.

In a WDM POM, each of the multiple downstream signal DS1, DS2, DS3 of a specific wavelength carries one or more date signals that are assigned to one or more ONUs. Each ONU is assigned a specific downstream wavelength. The remote node RN receives the downstream signals and distributes them onto the optical branches B1, B2, B3 that are connected to the remote node RN via WDM splitting.

According to a first solution of a TDM PON, shown in Figure 1, the remote node RN contains an optical power splitter, which splits the power of the downstream signal DS1, DS2, DS3 onto the branches B1, B2, B3 that are connected to the remote node RN. According to this first solution, all ONUs receive a same downstream signal. According to a second solution of a WDM PON, not explicitly shown in Figure 1, the remote node contains an optical wavelength multiplexer/de-multiplexer, which multiplexes the downstream signals DS1, DS2, DS3 such that a specific downstream signal with a specific wavelength that carries data signals assigned to one or more specific ONUs is provided only onto the specific branch of these specific ONUs. The optical wavelength de-multiplexer is preferably an Arrayed Waveguide Grating (AWG). According to this second solution, an ONU receives a downstream signal only at that downstream wavelength which is assigned to this ONU. The splitting at the remote node RN is performed as WDM splitting.

In a TDM PON, the ONUs transmit respective upstream signals US1, US2, US3 at a same upstream wavelength in an upstream direction US but during different time slots..

In a WDM PON , the ONUs transmit respective upstream signals US1, US2, US3 at respective upstream wavelengths that are assigned to the ONUs in the upstream direction US.

The upstream signals US1, US2, US3 are combined by the optical splitting units OSC1, OSC2, OSC3. In the case of a WDM PON, the remote node RN, the upstream signals US1, US2, US3 are multiplexed onto the feeder fiber OF by an optical multiplexing device, which is preferably the previously mentioned AWG. In the case that the PON is a TDM PON, the remote node RN contains a combiner that combines the upstream signals US1, US2, US3.

The techniques of TDM and WDM may be combined as a TWDM PON,

Within the OLT and the ONUs, the optical signals are usually detected by optical receivers containing photo diodes for optical-electrical conversion.

### Description of embodiments

It is an object of the proposed method as well as the proposed devices to solve the problem of detecting a possible connection of a specific ONT to a dedicated port of a remote node.

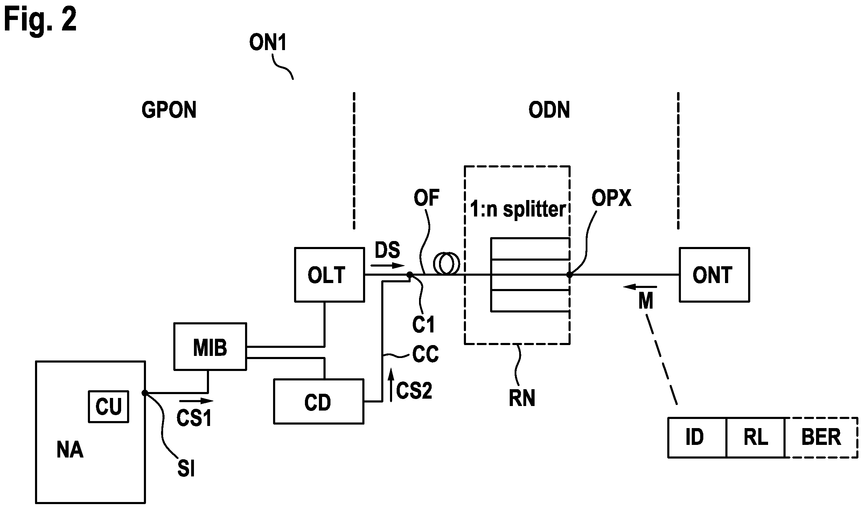

Figure 2 shows an optical access network ON1. The proposed method for monitoring a connectivity of an optical network terminal to an optical output port of a remote node in an optical access network will now be described in detail with regard to the example of the access network ON1.

The access network ON1 is for example a GPON network, which uses the multiplexing technique of TDM.

A network analyser NA transmits a control signal CS1 to a data base that is preferably a management information base MIB. The control signal CS1 indicates a request for modulating a power level of an optical downstream signal DS at a dedicated optical output port OPX of the remote node RN.

The network analyser NA comprises a control unit CU and a signalling interface SI. The control unit CU is operable to generate the control signal CS1, that indicates a request for modulating a power level of an optical downstream signal at the dedicated output port OPX of the remote node RN. The signalling interface SI is operable to transmit the control signal CS1.

Furthermore, the network analyser NA comprises a data interface, not explicitly shown in Figure 2, via which the network analyser NA is able to retrieve from the management information base MIB reception level data, wherein this reception level data indicates reception levels of a downstream signal received at an optical network terminal ONT for successive time instances. In which way the management information base MIB is able to provide such reception level data will be described in detail further below. Furthermore, the control unit CU of the network analyser NA is operable to derive a potential connection of the optical network terminal ONT to the dedicated output port OPX. Also this will be described in detail further below.

The control signal CS1 is stored within the management information base MIB as an electrical control signal. A controller CD retrieves the control signal CS1 from the management information base MIB. The controller CD does so, by periodically requesting the management information base MIB to provide stored control signals to the controller CD.

Alternatively, the network analyser NA sends the control signal CS1 directly to the controller CD, which is not shown explicitly in Figure 2. Preferably, the control signal CS1 is sent periodically by the network analyser NA to the controller CD.

The controller CD transmits an output controls signal CS2, which indicates the dedicated output port OPX of the remote node RN, in dependence on the control signal CS1, which is either retrieved from the management information base MIB or received from the network analyser.

The output control signal CS2 is transmitted via a control channel CC to the remote node RN.

According to a first alternative solution, the control signal CS is transmitted via a control channel that is an optical channel, wherein in this alternative solution the controller CD is coupled optically via a coupler C to the optical feeder fibre OF of the network ON1. According to a second alternative solution, the controller CD transmits the output control signal CS2 to the remote node RN as a wireless signal via a wireless control channel, which is not explicitly shown in Figure 2. According to a third alternative solution, the controller CD transmits the output control signal CS2 as an electrical signal via an electrical connection as the control channel to the remote node RN, wherein the electrical connection is not shown explicitly shown in Figure 2.

The management information base MIB may be a part of a network card, which may be connected via a bus system to the controller CD and/or the OLT.

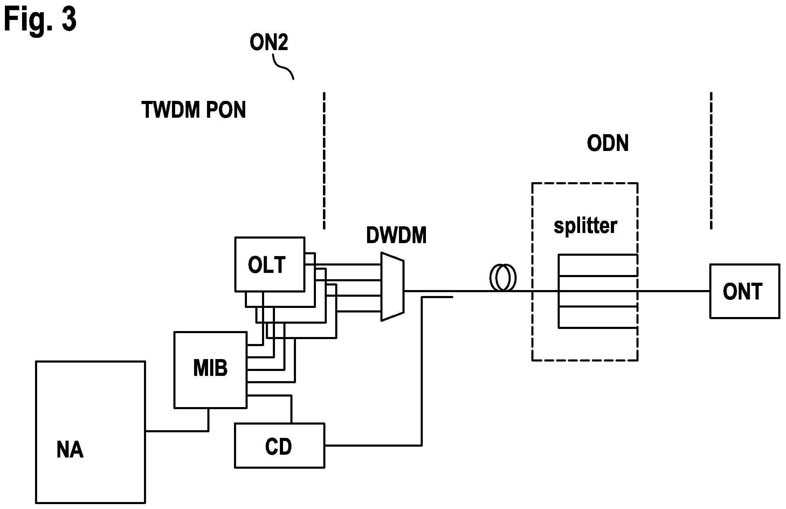

Figure 3 shows an alternative solution of an optical access network ON2, which may be for example a TWDM passive optical network employing the multiplexing techniques of TDM and WDM in conjunction. In such a network, different OLT devices may receive respective upstream signals from the respective ONTs and then report the indicated reception levels to the management information base MIB, which then stores the respective reception data level for the respective ONTs.

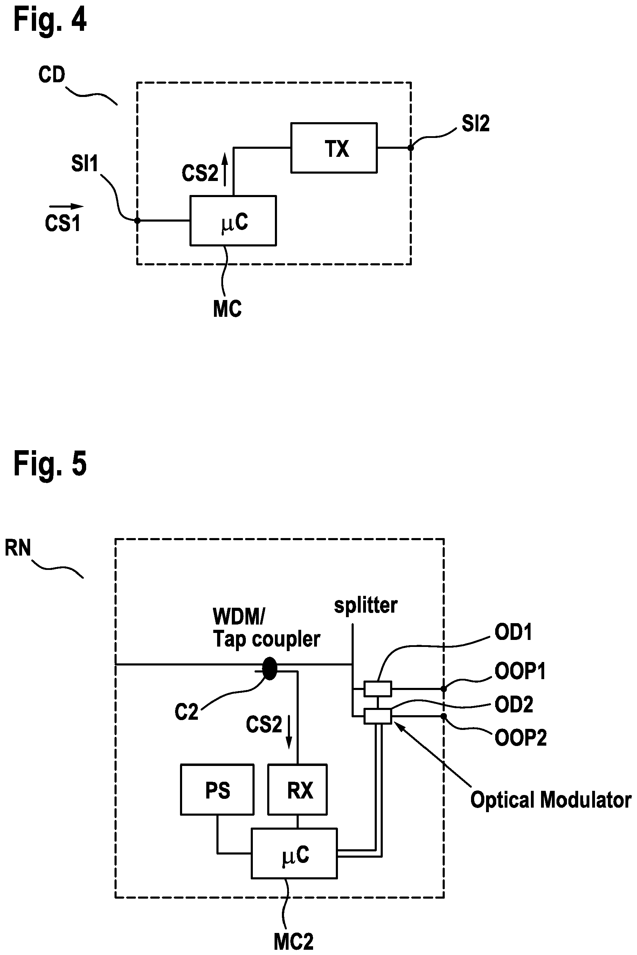

Figure 4 shows the controller CD in more detail. The controller CD receives the control signal CS1 and analyses either one of these signals at a micro controller MC. The micro controller MC then generates the output control signal CS2, which then is transmitted by a transmitter TX of the controller CD via the signalling interface SI2 into the control channel.

In other words, the controller CD receives the signal CS1 via a first signal interface SI1. The control unit MC is operable to generate the output control signal CS2 indicating the dedicated output port of the remote node in dependence on the input control signal CS1. The controller CD is connected at its second signalling interface SI2 to the control channel for transmitting the output control signal CS2.

Figure 5 shows a proposed remote node according to a preferred embodiment.

The remote node RN comprises an optical input port. Furthermore, the remote node RN comprises a number of optical output ports OOP1, OOP2. Furthermore, the remote node RN comprises an optical splitter, which splits an optical downstream signal from the input port on to the output ports OOP1, OOP2. At each of these output ports OOP1, OOP2 a respective optical modulation device OD1, OD2 is present. Each optical modulation device OD1, OD2 is operable to modulate a power level of the optical downstream signal fraction that is split onto the respective output port.

The remote node RN comprises furthermore a receiver RX, that is operable to receive the control signal CS2 indicating one of the output ports OP1, OP2 via the control channel. In the embodiment shown in Figure 5, the control channel is an optical control channel, such that in this solution the receiver is coupled optically via an optical coupler, which may be a WDM coupler or a tap coupler, to the optical input port. The receiver RX then provides an electrical representation of the control signal to a control unit MC2, which is preferably a microcontroller. The control unit MC2 is connected to the different modulation devices OD1, OD2 of the respective output ports OOP1, OOP2. The control unit MC2 is operable to activate that one of the optical modulation devices OD1, OD2 that is present at the output port indicated in the control signal CS2.

The remote node RN is preferably powered by a power supply PS. Alternatively, the remote node RN is powered via an optical signal received from the OLT, which is not shown explicitly in Figure 5.

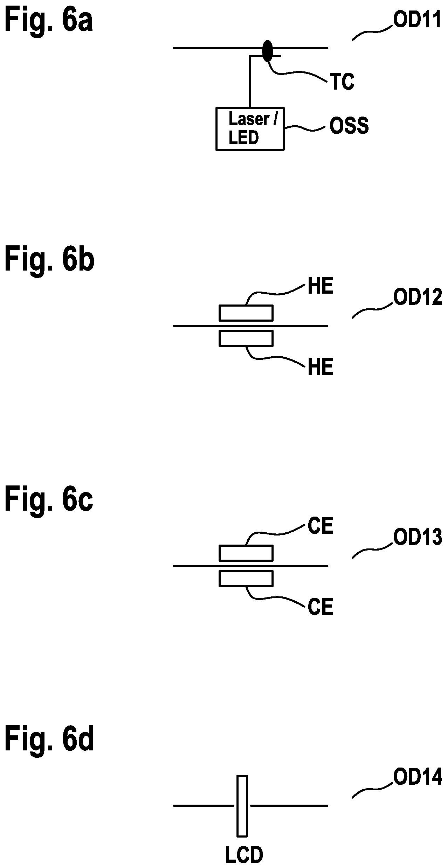

Figure 6a shows a first solution OD11 for an optical modulation device. In this case the optical modulation device is an additional optical signal source OSS, which is optically coupled via a tap coupler TC to the output port at which the modulation device is present.

According to a second solution, shown in Figure 6b, the optical modulation device OD12 is a thermo electrical modulator, comprising one or more heating electrodes HE. By applying energy to these heating electrodes HE, the optical modulation device may cause modulation of the power level of the optical signal passing the modulation device towards the optical output port at which the modulation device is present.

According to a third solution, shown in Figure 6c, the optical modulation device OD13 exploits an electro optical effect. One or more electrodes are present at the optical fibre for causing an attenuation of an optical signal passing the optical fibre, in the case that a voltage is applied to the electrodes CE.

According to a fourth solution, as shown in Figure 6d, the optical modulation device OD14 comprises a liquid crystal display element LCD, which an optical signal propagating among the optical fibre has to pass, wherein controlling the LCD element may cause an attenuation of the optical downstream signal that is split onto the respective output port at which the optical modulation device is present.

Coming back to Figure 5, the remote node RN operates in such a way, that the control unit MC2 activates an optical modulation device OD1, OD2 at that output port OOP1, OOP2 that is the dedicated output port indicated by the control signal. Thus, a modulation of the power level of the downstream signal split onto the respective output port may be caused. Preferably, the modulation is an attenuation of the power level of the split downstream signal fraction. Alternatively, the modulation is an amplification of the power level of the downstream signal, as described with the solution with regard to Figure 6a, wherein the optical modulation device adds an additional optical signal from an additional optical signal source.

Coming now back to Figure 2, the ONT receives the downstream signal fraction that is split onto the output port OPX and measures the reception level of the received downstream signal fraction in a periodic manner. Preferably, the ONT measures the reception level of the downstream signal fraction received by the ONT in steps of 0.5 seconds.

In a periodic manner, the ONT reports received reception levels of the received downstream signal fraction by sending respective data messages M. Such data messages M indicate a reception level of the received downstream signal. Thus, successive data messages M indicate reception levels of the received downstream signal for successive time instances. Such reporting via data messages M may be performed by the ONT with a periodicity of 1 second. Preferably, the ONT indicates within a data message M the reception level RL in quantised steps of quantised values.

Furthermore, the ONT indicates within a data message M its identification number ID, which allows the OLT receiving the data messages M to determine, at which ONT of which identification name ID the respective reception levels RL indicated in the data messages M were measured.

The OLT receives the reception level messages M from the ONT in a periodic manner. The OLT derives from these reception level messages M reception level data and provides this reception level data to the management information base MIB, which stores the reception level data. The reception level data indicates reception levels of the downstream signal fraction received at the ONT for successive time instances.

The network analyser NA retrieves via a data interface, which is not explicitly shown in Figure 2, the reception level data from the management information base MIB.

The network analyser NA uses different reception levels of different successive time instances indicated by the reception level data and determines a possible connection of the ONT to the output port OPX in the case, that the reception level of one time instance differs to reception levels of one or more following successive time instances by more than a pre-defined threshold. Such threshold may be a negative or positive threshold. Preferably, such difference between the levels of the first time instance and the levels of the further successive time instances by the pre-defined threshold has to be present for a pre-defined time window. The pre-defined time window is preferably of the size of 10 seconds.

According to a further solution, the ONT reports within the data messages M not only the reception level RL but also a derived bit error ratio BER to the OLT, which then provides such bit error ratio data to the management information base MIB. The network analyser NA may then retrieve such bit error ratio data for different time instances from the management information base MIB and use not only the different reception levels of successive time instances but also the different bit error ratios of successive time instances for verifying, whether the ONT with the indicated identification name ID is connected to the dedicated output OPX of the remote node RN.

## Claims

1. Method of monitoring a connectivity of an optical network terminal to an optical output port of a remote node in an optical access network,
comprising
- at a network analyzer (NA), transmitting a control signal (CS1) indicating a request for modulating a power level of an optical downstream signal at a dedicated optical output port (OPX) of a remote node (RN),
- at a controller (CD), receiving said control signal (CS1) from said network analyzer (NA) or retrieving said control signal (CS1) from a data base (MIB) and furthermore transmitting an output control signal (CS2) indicating said dedicated output port (OPX) of said remote node (RN) via a control channel to said remote node (RN) in dependence on the received control signal or the retrieved control signal,
**characterized by**
- at said remote node (RN), receiving via said control channel said output control signal (CS2) indicating said dedicated output port (OPX) and furthermore activating an optical modulation device present at said dedicated output port (OPX),
- at said optical network terminal (ONT), indicating reception levels of a received downstream signal for successive time instances,
- at an optical line terminal (OLT), receives the indicated reception levels from said ONT in a periodic manner, deriving from said reception levels reception level data and providing said reception level data to said data base (MIB), which stores said reception level data,
- at said network analyzer (NA), retrieving said reception level data from said data base (MB), wherein said reception level data indicates said reception levels of said downstream signal for said successive time instances, and furthermore deriving a potential connection of said optical network terminal to said dedicated output port (OPX), and wherein said network analyzer(NA) derives said potential connection in the case, that the reception level of one time instance differs to reception levels of one or more following successive time instances by more than a pre-defined threshold.

2. Method according to claim 1,
wherein said control channel is an optical control channel.

3. Method according to claim 1,
wherein said control channel is a wireless control channel.

4. Method according to claim 1,
wherein said control channel is an electrical connection channel.

5. Network analyzer (NA) for an optical access network,
comprising
- a control unit (C), and
- a signaling interface (SI),
wherein said control unit (CU) is operable to generate a control signal (CS1) indicating a request for modulating a power level of an optical downstream signal at a dedicated output port (OPX) of a remote node (RN),
and wherein said signaling interface (SI) is operable to transmit said control signal (CS1), comprising furthermore,
- a data interface, operable to retrieve reception level data from a data base (MIB), wherein said reception level data indicates reception levels of a downstream signal received at an optical network terminal (ONT) at successive time instances,
wherein said control unit (CU) is furthermore operable to derive a potential connection of said optical network terminal to said dedicated output port (OPX), and wherein said network analyzer(NA) derives said potential connection in the case, that the reception level of one time instance differs to reception levels of one or more following successive time instances by more than a pre-defined threshold.

6. Controller(CD) for controlling a remote node (RN) of an optical access network,
comprising
- a first signaling interface (SI1), operable to
∘ receive from a network analyzer an input control signal (CS1) indicating a request for modulating a power level of an optical downstream signal at a dedicated output port of a remote node, or
∘ to retrieve said input control signal (CS) from a data base (MIB),
- a control unit (CU), operable to generate an output control signal (CS3) indicating said dedicated output port (OPX) of said remote node (RN) in dependence on said input control signal (CS1),
- a second signaling interface (SI2), operable to transmit said output control signal (CS2) via a control channel to said remote node (RN).

7. Remote node (RN) for an optical access network,
comprising
- an optical input port,
- a number of optical output ports (OOP1, OOP2),
- an optical splitting device, operable to split an optical downstream signal from said input port onto said output ports,
wherein at each output port (OOP1, OOP2) a respective optical modulation device (OD1, OD2) is present, wherein each modulation device (OD1, OD2) is operable to modulate a power level of the optical downstream signal fraction split onto the respective output port,
comprising furthermore
- a receiver (Rx), operable to receive a control signal(CS2) indicating one of said output ports via a control channel, and
- a control unit (MC), operable to activate that one of said optical modulation devices present at the indicated output port.

## Patentansprüche

1. Verfahren zur Überwachung einer Konnektivität eines optischen Netzwerkendgerätes zu einem optischen Ausgangsport eines entfernten Knotens in einem optischen Zugangsnetzwerk,
umfassend
- an einem Netzwerkanalysator (NA), Übertragen eines Steuersignals (CS1), das eine Anfrage zum Modulieren eines Leistungspegels eines optischen stromabwärtigen Signals anzeigt, an einen dedizierten optischen Ausgangsport (OPX) eines entfernten Knotens (RN),
- an einer Steuerung (CD), Empfangen des Steuersignals (CS1) von dem Netzwerkanalysator (NA) oder Abrufen des Steuersignals (CS1) aus einer Datenbank (MIB) und, ferner, Übertragen eines Ausgangssteuersignals (CS2), das den dedizierten Ausgangsport (OPX) des entfernten Knotens (RN) anzeigt, über einen Steuerkanal an den entfernten Knoten (RN) in Abhängigkeit von dem empfangenen Steuersignal oder dem abgerufenen Steuersignal,
**gekennzeichnet durch**
- an dem entfernten Knoten (RN), Empfangen des Ausgangssteuersignals (CS2), das den dedizierten Ausgangsport (OPX) anzeigt, über den Steuerkanal und, ferner, Aktivieren einer an dem dedizierten Ausgangsport (OPX) vorhandenen optischen Modulationsvorrichtung,
- an der optischen Netzwerkvorrichtung (ONT), Anzeigen des Empfangspegels eines empfangenen Abwärtstrecken-Signals für aufeinanderfolgende Zeitinstanzen,
- an einem optischen Leitungsendgerät (OLT), das den angezeigten Empfangspegel von dem ONT in einer periodischen Weise empfängt, Ableiten von Empfangspegeldaten aus den Empfangspegeln und Bereitstellen der Empfangspegeldaten an die Datenbank (MIB), die die Empfangspegeldaten speichert,
- an dem Netzwerkanalysator (NA), Abrufen der Empfangspegeldaten aus der Datenbank (MB), wobei die Empfangspegeldaten die Empfangspegel des stromabwärtigen Signals für die aufeinanderfolgenden Zeitinstanzen anzeigen, und, ferner, Ableiten einer potentiellen Verbindung des optischen Netzwerkendgeräts mit dem dedizierten Ausgangsport (OPX), und wobei der Netzwerkanalysator (NA) die potentielle Verbindung in dem Fall ableitet, dass sich der Empfangspegel einer Zeitinstanz von den Empfangspegeln einer oder mehrerer aufeinanderfolgender Zeitinstanzen um mehr als eine vordefinierte Schwelle unterscheidet.

2. Verfahren nach Anspruch 1,
wobei der Steuerkanal ein optischer Steuerkanal ist.

3. Verfahren nach Anspruch 1,
wobei der Steuerkanal ein drahtloser Steuerkanal ist.

4. Verfahren nach Anspruch 1,
wobei der Steuerkanal ein elektrischer Verbindungskanal ist.

5. Netzwerkanalysator (NA) für ein optisches Zugangsnetz, umfassend
- eine Steuereinheit (C), und
- eine Signalisierungsschnittstelle (SI),
wobei die Steuereinheit (CU) betreibbar ist, ein Steuersignal (CS1) zu erzeugen, das eine Anfrage zum Modulieren eines Leistungspegels eines optischen Abwärtsstrecken-Signals an einem dedizierten Ausgangsport (OPX) eines entfernten Knotens (RN) anzeigt,
und wobei die Signalisierungsschnittstelle (SI) betreibbar ist, das Steuersignal (CS1) zu übertragen,
ferner umfassend:
- eine Datenschnittstelle, die betreibbar ist, Empfangspegeldaten aus einer Datenbank (MIB) abzurufen, wobei die Empfangspegeldaten Empfangspegel eines Abwärtsstrecken-Signals anzeigen, das an einem optischen Netzwerkendgerät (ONT) zu aufeinanderfolgenden Zeitpunkten empfangen wird,
wobei die Steuereinheit (CU) ferner betreibbar ist, eine potentielle Verbindung des optischen Netzwerkendgerätes mit dem dedizierten Ausgangsport (OPX) abzuleiten, und wobei der Netzwerkanalysator (NA) die potentielle Verbindung in dem Fall ableitet, dass der Empfangspegel einer Zeitinstanz sich von Empfangspegeln einer oder mehrerer aufeinanderfolgenden Zeitinstanzen um mehr als einen vordefinierte Schwelle unterscheidet.

6. Controller (CD) zur Steuerung eines entfernen Knotens (RN) eines optischen Zugangsnetzwerks, umfassend
- eine erste Signalisierungsschnittstelle (SI1), die betreibbar ist zum
∘ Empfangen von einem Netzwerkanalysator eines Eingangssteuersignals (CS1), das eine Anfrage zum Modulieren eines Leistungspegels eines optischen Abwärtstrecken-Signals an einem dedizierten Ausgangsport eines entfernten Knotens anzeigt, oder
∘ Abrufen des Eingangssteuersignals (CS) aus einer Datenbank (MIB),
- eine Steuereinheit (CU), die beteibbar ist, ein Ausgangssteuersignal (CS3), das den dedizierten Ausgangsport (OPX) des entfernten Knotens (RN) anzeigt, in Abhängigkeit von dem Eingangssteuersignal (CS1) zu erzeugen,
- eine zweite Signalisierungsschnittstelle (SI2), die betreibbar ist, das Ausgangssteuersignal (CS2) über einen Steuerkanal an den entfernten Knoten (RN) zu senden.

7. Entfernter Knoten (RN) für ein optisches Zugangsnetzwerk, umfassend
- einen optischen Eingangsport
- eine Anzahl optischer Ausgangsports (OOP1, OOP2),
- eine optische Aufteilungsvorrichtung, die betreibbar ist, ein optisches stromabwärtiges Signal von dem Eingangsport auf die Ausgangsports aufzuteilen;
wobei an jedem Ausgangsport (OOP1, OOP2) eine jeweilige optische Modulationsvorrichtung (OD1, OD2) vorhanden ist, wobei jede Modulationsvorrichtung (OD1, OD2) betreibbar ist, einen Leistungspegel des auf den jeweiligen Ausgangsport aufgeteilten optischen stromabwärtigen Signalanteils zu modulieren, ferner umfassend
- einen Empfänger (Rx), der betreibbar ist, ein Steuersignal (CS2), das einen der Ausgangsport anzeigt, über einen Steuerkanal zu empfangen, und
- eine Steuereinheit (MC), die betreibbar ist, diejenige der optischen Modulationsvorrichtungen, die an dem angezeigten Ausgangsport vorhanden ist, zu aktivieren.

## Revendications

1. Procédé de surveillance d'une connectivité d'un terminal de réseau optique à un port de sortie optique d'un noeud distant dans un réseau d'accès optique, comprenant
- au niveau d'un analyseur de réseau (NA), la transmission d'un signal de commande (CS1) indiquant une demande pour moduler un niveau de puissance d'un signal optique aval au niveau d'un port de sortie optique dédié (OPX) d'un noeud distant (RN),
- au niveau d'un dispositif de commande (CD), la réception dudit signal de commande (CS1) en provenance dudit analyseur de réseau (NA) ou la récupération dudit signal de commande (CS1) à partir d'une base de données (MIB) et, en outre, la transmission d'un signal de commande de sortie (CS2) indiquant ledit port de sortie dédié (OPX) dudit noeud distant (RN) par le biais d'un canal de commande au dit noeud distant (RN) en fonction du signal de commande reçu ou du signal de commande récupéré,
**caractérisé par**
- au niveau dudit noeud distant (RN), la réception, par le biais dudit canal de commande, dudit signal de commande de sortie (CS2) indiquant ledit port de sortie dédié (OPX) et, en outre, l'activation d'un dispositif de modulation optique présent au niveau dudit port de sortie dédié (OPX),
- au niveau dudit terminal de réseau optique (ONT), l'indication de niveaux de réception d'un signal aval reçu pour des instances temporelles successives,
- au niveau d'un terminal de ligne optique (OLT), qui reçoit les niveaux de réception indiqués en provenance dudit terminal ONT de manière périodique, l'obtention, à partir desdits niveaux de réception, de données de niveau de réception et la fourniture desdites données de niveau de réception à ladite base de données (MIB), qui stocke lesdites données de niveau de réception,
- au niveau dudit analyseur de réseau (NA), la récupération desdites données de niveau de réception à partir de ladite base de données (MIB), dans lequel lesdites données de niveau de réception indiquent lesdits niveaux de réception dudit signal aval pour lesdites instances temporelles successives et, en outre, l'obtention d'une connexion potentielle dudit terminal de réseau optique au dit port de sortie dédié (OPX) et dans lequel ledit analyseur de réseau (NA) obtient ladite connexion potentielle dans le cas où le niveau de réception d'une instance temporelle est différent de niveaux de réception d'une ou de plusieurs instances temporelles successives suivantes de plus d'un seuil prédéfini.

2. Procédé selon la revendication 1,
dans lequel ledit canal de commande est un canal de commande optique.

3. Procédé selon la revendication 1,
dans lequel ledit canal de commande est un canal de commande sans fil.

4. Procédé selon la revendication 1,
dans lequel ledit canal de commande est un canal de connexion électrique.

5. Analyseur de réseau (NA) pour un réseau d'accès optique,
comprenant
- une unité de commande (C) et
- une interface de signalisation (SI),
dans lequel ladite unité de commande (CU) permet de générer un signal de commande (CS1) indiquant une demande pour moduler un niveau de puissance d'un signal optique aval au niveau d'un port de sortie dédié (OPX) d'un noeud distant (RN),
et dans lequel ladite interface de signalisation (SI) permet de transmettre ledit signal de commande (CS1), comprenant en outre
- une interface de données permettant de récupérer des données de niveau de réception à partir d'une base de données (MIB), dans lequel lesdites données de niveau de réception indiquent des niveaux de réception d'un signal aval reçu au niveau d'un terminal de réseau optique (ONT) à des instances temporelles successives,
dans lequel ladite unité de commande (CU) permet en outre d'obtenir une connexion potentielle dudit terminal de réseau optique au dit port de sortie dédié (OPX) et dans lequel ledit analyseur de réseau (NA) obtient ladite connexion potentielle dans le cas où le niveau de réception d'une instance temporelle est différent de niveaux de réception d'une ou de plusieurs instances temporelles successives suivantes de plus d'un seuil prédéfini.

6. Dispositif de commande (CD) pour commander un noeud distant (RN) d'un réseau d'accès optique
comprenant
- une première interface de signalisation (SI1) permettant
∘ de recevoir, d'un analyseur de réseau, un signal de commande d'entrée (CS1) indiquant une demande pour moduler un niveau de puissance d'un signal optique aval au niveau d'un port de sortie dédié d'un noeud distant ou
∘ de récupérer ledit signal de commande d'entrée (CS) à partir d'une base de données (MIB),
- une unité de commande (CU) permettant de générer un signal de commande de sortie (CS3) indiquant ledit port de sortie dédié (OPX) dudit noeud distant (RN) en fonction dudit signal de commande d'entrée (CS1),
- une seconde interface de signalisation (SI2) permettant de transmettre ledit signal de commande de sortie (CS2) par le biais d'un canal de commande au dit noeud distant (RN).

7. Noeud distant (RN) pour un réseau d'accès optique, comprenant
- un port d'entrée optique,
- un certain nombre de ports de sortie optique (OOP1, OOP2),
- un dispositif de division optique permettant de diviser un signal optique aval provenant dudit port d'entrée sur lesdits ports de sortie,
dans lequel, au niveau de chaque port de sortie (OOP1, OOP2), un dispositif de modulation optique respectif (OD1, OD2) est présent, dans lequel chaque dispositif de modulation (OD1, OD2) permet de moduler un niveau de puissance de la fraction de signal optique aval divisée sur le port de sortie respectif,
comprenant en outre
- un récepteur (Rx) permettant de recevoir un signal de commande (CS2) indiquant l'un desdits ports de sortie par le biais d'un canal de commande et
- une unité de commande (MC) permettant d'activer ce dispositif de modulation optique desdits dispositifs de modulation optique présents au niveau du port de sortie indiqué.
